# EUROPEAN PATENT APPLICATION

(11) **EP 4 517 136 A1**
(43) Date of publication of application: **05.03.2025**
(21) Application number: 24194440.4
(22) Date of filing: 14.08.2024
(51) Int. Cl.: F16H 61/32, B60R 25/06, F16H 61/28

(54) **ACTUATOR COMPRISING DC MOTOR AND CONTROL METHOD OF THE SAME**

(30) Priority: 30.08.2023 KR 20230114112
(71) Applicant: SJG ASENTEC Co., Ltd., Asan-si, Chungcheongnam-do 31418 (KR)
(72) Inventor: Kim, Taeho, 31465 Asan-si, Chungcheongnam-do (KR); Choi, Sanghoon, 31183 Cheonan-si, Chungcheongnam-do (KR); Lee, Sungjae, 31158 Cheonan-si, Chungcheongnam-do (KR)
(74) Representative: BCKIP Part mbB

(57) **Abstract**

An actuator of a vehicle is provided, and an actuator according to an embodiment of the present disclosure comprises: a DC motor configured to be driven by application of current to change a gear shift stage; a position sensor configured to detect a position of the DC motor; and a controller configured to control the DC motor, wherein the controller comprises a bidirectional switch circuit to control a flow of current to the DC motor, and if a voltage from a position sensor power supply is applied to the position sensor, the bidirectional switch circuit is configured to be operated to drive the DC motor.

## Description

### CROSS-REFERENCE TO RELATED APPLICATION

This application claims the benefit of and priority to Korean Patent Application No. 2023-0114112 filed on August 30, 2023.

### TECHNICAL FIELD

The present disclosure relates to an actuator of a vehicle comprising a DC (Direct Current) motor and a control method of the same. Specifically, the present disclosure relates to an actuator comprising a DC motor with improved security performance by providing a security circuit in a power line of the DC motor and a control method of the actuator comprising the DC motor.

### BACKGROUND

In automatic transmissions for vehicles, BLDC (Brushless Direct Current) motors are often used as motors to change a gear shift stage, but there is a downside that these BLDC motors are expensive, weigh a lot, and have a complicated device structure for driving the motor.

On the other hand, when using a DC motor (brush type), it has an advantage of being cheaper and having a less complicated structure. However, since it may be easier to operate from the outside because it can be driven by connecting the motor power supply to the connector, there is a disadvantage that there may be security issues such as a vehicle theft.

Therefore, there is a need for an actuator for a transmission that can improve security performance to prevent the vehicle theft while using a DC motor with a low cost and a simple structure.

### SUMMARY

The present disclosure is to solve the above-mentioned problems of the prior art, and the object of the present disclosure is to provide an actuator comprising a DC motor having a simple structure and a security function with reducing manufacturing costs and to provide a control method of the actuator comprising the DC motor.

Further, the object of the present disclosure is to provide an actuator comprising a DC motor and a control method of the same that improve security performance by operating a bidirectional switch circuit only if a predetermined data signal is received using communication with a vehicle processor.

However, the technical problem to be achieved by the embodiments of the present disclosure is not limited to the technical problems described above, and other technical problems may exist.

As a technical means for achieving the above technical problem, an actuator of a vehicle according to an embodiment of the present disclosure comprises: a DC motor configured to be driven by application of current to change a gear shift stage; a position sensor configured to detect a position of the DC motor; and a controller configured to control the DC motor, wherein the controller comprises a bidirectional switch circuit to control a flow of current to the DC motor, and if a voltage from a position sensor power supply is applied to the position sensor, the bidirectional switch circuit is configured to be operated to drive the DC motor.

On the other hand, an actuator of a vehicle according to another embodiment of the present disclosure comprises: a DC motor configured to be driven by application of current to change a gear shift stage; a position sensor configured to detect a position of the DC motor; and a controller configured to control the DC motor, wherein the controller comprises: a bidirectional switch circuit for controlling a flow of current to the DC motor; and a microprocessor connected to the bidirectional switch circuit, and if the microprocessor receives a predetermined data signal through communication with a vehicle processor, the bidirectional switch circuit is configured to be operated to drive the DC motor.

Further, the bidirectional switch circuit may be configured to be operated to drive the DC motor if a voltage from a position sensor power supply is applied to the position sensor and the microprocessor receives the predetermined data signal.

Further, the microprocessor may be configured to recognize the received data signal in synchronization with an output signal of the position sensor, determine whether the received data signal is the predetermined data signal, and operate the bidirectional switch circuit if a reception confirmation signal is transmitted.

Further, if the received data signal is not the predetermined data signal, the microprocessor may be configured to request retransmission of the data signal a predetermined number of times, and to control the bidirectional switch circuit not to be operated if receptions of the data signal exceed the predetermined number of times.

Meanwhile, a control method of an actuator of a vehicle according to another embodiment of the present disclosure comprises: receiving a data signal from a vehicle processor; determining whether the received data signal is a predetermined data signal; if the received data signal is the predetermined data signal, operating a bidirectional switch circuit to control a flow of current to a DC motor; and driving the DC motor.

Further, the determining of whether the received data signal is the predetermined data signal may comprise: recognizing the received data signal in synchronization with an output signal of a position sensor for detecting a position of the DC motor; and transmitting a reception confirmation signal if the received data signal is determined to be the predetermined data signal.

Further, if it is determined that the received data signal is not the predetermined data signal in the determining of whether the received data signal is the predetermined data signal, a request to retransmit the data signal may be transmitted to the vehicle processor, and if receptions of the data signal exceed a predetermined number of times by repeating the retransmission request, the bidirectional switch circuit may be controlled not to be operated.

The above-described means for solving the problem is only exemplary and should not be construed as limiting the present disclosure. In addition to the exemplary embodiments described above, additional embodiments may exist in the drawings and the following detailed description of the present disclosure.

According to certain embodiments of the present disclosure, in an actuator for a transmission comprising a DC motor, it is possible to provide the actuator that enables reducing the manufacturing cost and simplifying the structure of the device and has a security function for preventing the vehicle theft, and to provide the control method of the actuator.

In addition, according to certain embodiments of the present disclosure, in an actuator for a transmission comprising a DC motor, it is possible to provide the actuator with further improved security performance through synchronized signal transmission using communication, and to provide the control method of the actuator.

However, the effects obtainable from the present disclosure are not limited to the effects described above, and other effects may exist.

### BRIEF DESCRIPTION OF THE DRAWINGS

FIG. 1 is a control block diagram of an actuator of a vehicle according to an embodiment of the present disclosure.
FIG. 2 is a diagram schematically showing a circuit included in a controller of the actuator according to the embodiment of the present disclosure.
FIG. 3 is a diagram schematically showing a configuration of a bidirectional switch circuit of a circuit included in the controller of the actuator according to the embodiment of the present disclosure.
FIG. 4 is a control block diagram of an actuator according to another embodiment of the present disclosure.
FIG. 5 is a diagram schematically showing a configuration of a bidirectional switch circuit and a microprocessor connected to the bidirectional switch circuit included in a controller of the actuator according to another embodiment of the present disclosure.
FIGS. 6A and 6B are diagrams schematically showing a method of transmitting and receiving synchronized signals through communication in the actuator according to another embodiment of the present disclosure.
FIG. 7 is a flowchart schematically showing a control method of the actuator according to another embodiment of the present disclosure.

### DETAILED DESCRIPTION

Hereinafter, with reference to the accompanying drawings, embodiments of the present disclosure will be described in detail so that those skilled in the art can easily practice the embodiments. However, the present disclosure may be implemented in many different forms and is not limited to the embodiments described herein. In addition, in order to clearly describe the present disclosure in the drawings, parts irrelevant to the description are omitted, and similar reference numerals are attached to similar parts throughout the present disclosure.

Throughout the present disclosure, if a part is said to be "connected" to another part, it is not only "directly connected", but also "electrically connected" with another element in between, including cases where they are "indirectly connected".

Throughout the present disclosure, if one member is said to be located "on", "above", "under", or "below" the other member, this includes not only the case of being in contact with the other member, but also the case that another member is positioned between the two members.

Throughout the present disclosure, if a part "includes" a certain component, it does not mean excluding other components, and it does mean that it may further include other components, unless otherwise stated.

Various embodiments of the present disclosure generally relate to an actuator for a transmission of a vehicle that is equipped with a security circuit to prevent theft and a control method of the actuator.

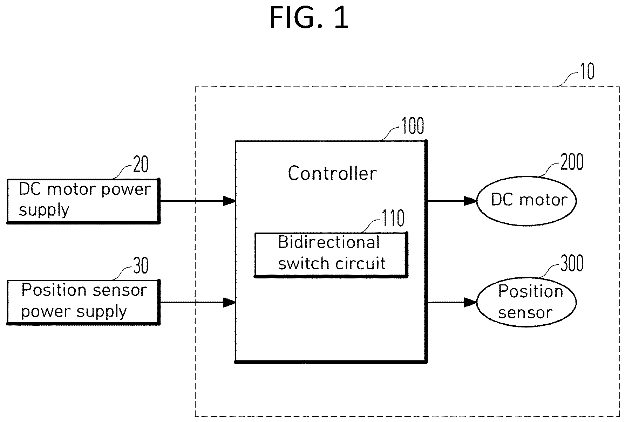

FIG. 1 is a control block diagram of an actuator of a vehicle according to an embodiment of the present disclosure.

Referring to FIG. 1, the actuator 10 according to the embodiment of the present disclosure may include a DC motor 200 configured to change the shifting gears by being driven by application of current, a position sensor 300 configured to detect the position of the DC motor 200, and a controller 100 configured to control the DC motor 200.

Here, the DC motor 200 may be a DC (direct current) motor equipped with brushes (brushed motor), and may be driven by applying a voltage from a power supply to allow current to flow, and the gear shift stage may be changed to P, D, R, etc. by changing the gear shift stage of the transmission by driving the motor.

The position sensor 300 may be a hall sensor installed inside the actuator. The hall sensor may be configured to detect the position of the DC motor, for example, by detecting the rotation of a magnetic member installed at an end of the rotor shaft of the motor.

Further, the controller 100 may include a bidirectional switch circuit 110 configured to control the flow of the current to the DC motor 200, and if a voltage from the position sensor power supply is applied to the position sensor, the bidirectional switch circuit 110 may be operated to drive the DC motor 200.

Meanwhile, the DC motor power supply 20 for driving the DC motor 200 and the position sensor power supply 30 for operating the position sensor 300 may be connected to the controller 100 of the actuator so that the DC motor power supply voltage and the position sensor power supply voltage may be applied to the DC motor 200 and the position sensor 300, respectively.

According to the actuator 10 according to the embodiment of the present disclosure having such a configuration, if a voltage is applied from the DC motor power supply 20 and a voltage is applied from the position sensor power supply 30, the bidirectional switch circuit 110 may be controlled to be operated to drive the DC motor 200.

Meanwhile, more specifically, the actuator 10 for the transmission may be an actuator used in a shift-by-wire (SBW) system of the vehicle. The shift-by-wire system may refer to a system that controls the transmission of the vehicle through an electrical connection structure consisting of an electronic shift lever and an electric motor instead of a mechanical connection structure.

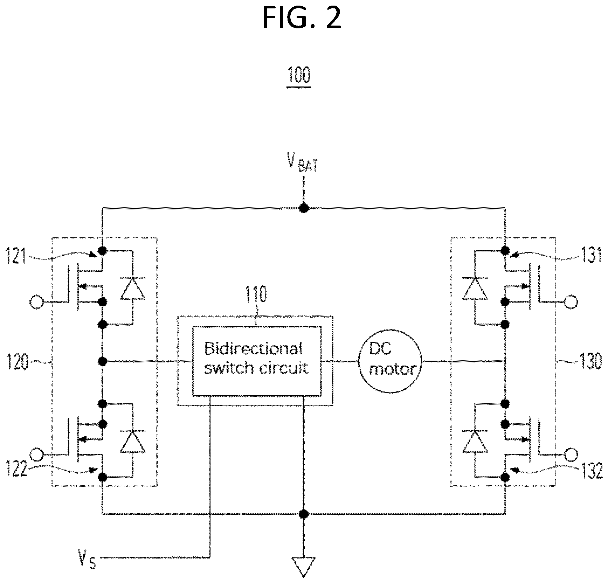

FIG. 2 is a diagram schematically showing a circuit included in a controller of the actuator according to the embodiment of the present disclosure.

As shown in Figure 2, the controller 100 of the actuator according to the embodiment of the present disclosure may include a circuit (a motor control circuit) configured to form an H-bridge by a first leg 120 including a first switching element 121 and a second switching element 122, a second leg 130 including a third switching element 131 and a fourth switching element 132, and the DC motor. The first to fourth switching elements 121, 122, 131 and 132 may be Field Effect Transistor (FET) elements.

Referring to FIG. 2, when the voltage V_{BAT} is applied from a DC motor power supply (e.g., a battery), by adjusting on/off status of the first to fourth switching elements 121, 122, 131 and 132, the current flowing through the DC motor may be controlled, and accordingly, the driving of the DC motor may be controlled.

Meanwhile, as shown in FIG. 2, the controller 100 may be equipped with a bidirectional switch circuit 110 that is connected in series with the DC motor and controls the flow of the current to the DC motor.

If this bidirectional switch circuit 110 is not operated, even if the voltage is applied from the DC motor power supply, the current does not flow through the DC motor, making it unable to drive the DC motor. Therefore, the DC motor may be driven if the DC motor power supply voltage is applied and the bidirectional switch circuit 110 is operated.

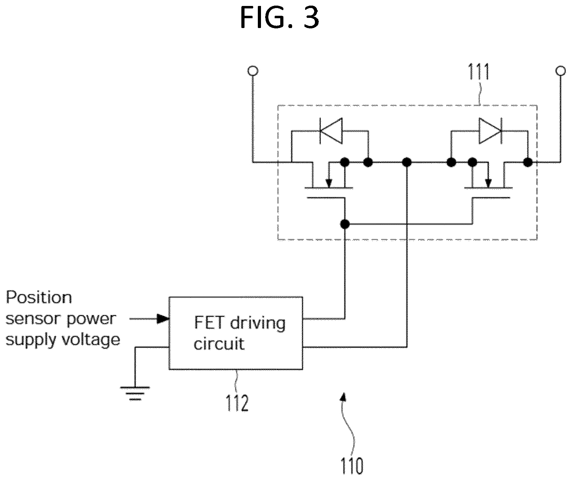

FIG. 3 is a diagram schematically showing a configuration of a bidirectional switch circuit of a circuit included in the controller of the actuator according to the embodiment of the present disclosure.

As shown in FIG. 3, the bidirectional switch circuit 110 according to the embodiment of the present disclosure may include an N-channel MOSFET 111 and a FET driving circuit 112. Specifically, the N-channel MOSFET 111 may include a back-to-back N-channel MOSFET as shown in FIG. 3 to control the flow of the current in both directions.

Meanwhile, if a voltage is applied from the position sensor power supply, the FET driving circuit 112 may drive the N-channel MOSFET 111 to allow the bidirectional current to flow. The position sensor power supply voltage may be preferably 2V or higher, and for example, the position sensor power supply voltage may be 5V.

That is, since the bidirectional switch circuit 110 may be operated only when a voltage (for example, voltage of 5V) is applied from the position sensor power supply to allow the current to flow into the DC motor, the DC motor may be driven in case that the voltage from the position sensor power supply (the position sensor power supply voltage) is applied, in addition to the voltage from the DC motor power supply (the DC motor power supply voltage).

In case that the gear shift stage of the transmission can be changed by driving the DC motor by applying only the voltage from the motor power supply as in the prior art, it is possible to change the gear shift stage by connecting only the motor power supply from outside the vehicle, making it easy for the vehicle to be stolen.

On the other hand, if the motor is driven only if the voltage from the position sensor power supply is applied as in the embodiment of the present disclosure, the DC motor cannot be driven by applying only the voltage from the motor power supply from the outside, so the security performance can be improved and it is possible to effectively prevent the vehicle theft.

In addition, according to the embodiment of the present disclosure, since the power line of the position sensor provided in the actuator can also be used to control the operation of the bidirectional switch circuit to drive the DC motor, it is possible to effectively prevent the theft without adding a separate connector for controlling the security circuit.

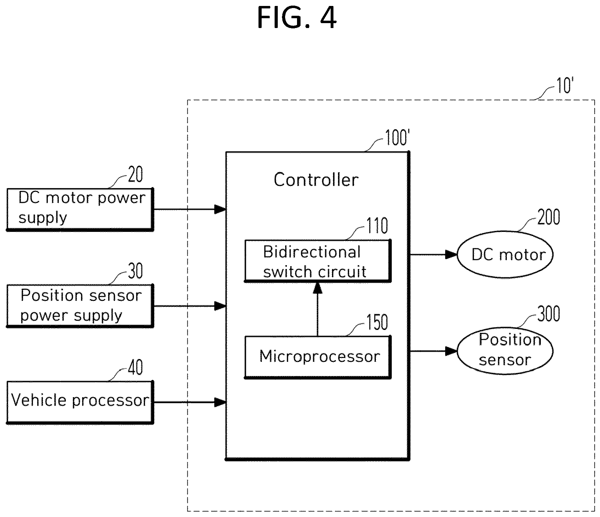

FIG. 4 is a control block diagram of an actuator according to another embodiment of the present disclosure.

According to the actuator 10' according to another embodiment of the present disclosure, the controller 100' may further comprise a microprocessor 150 connected with the bidirectional switch circuit 110 in addition to the bidirectional switch circuit 110, compared to the embodiment of FIG. 1.

Further, the microprocessor 150 may be connected to the vehicle processor 40 through communication. For example, communication between the vehicle processor (Master) and the microprocessor (Slave) of the actuator may be performed by using a serial communication protocol such as an I2C protocol or a SPI protocol.

Meanwhile, the communication between the vehicle processor 40 and the microprocessor 150 may be performed by the communication using a synchronous transmission method. Specifically, it may be controlled such that the transmission signal and the reception signal are synchronized by using a PWM (Pulse Width Modulation) signal, which is the output signal of the position sensor 300, as a reference clock, and the bidirectional switch circuit 110 is operated only if the microprocessor 150 received a predetermined data signal transmitted from the vehicle processor 40.

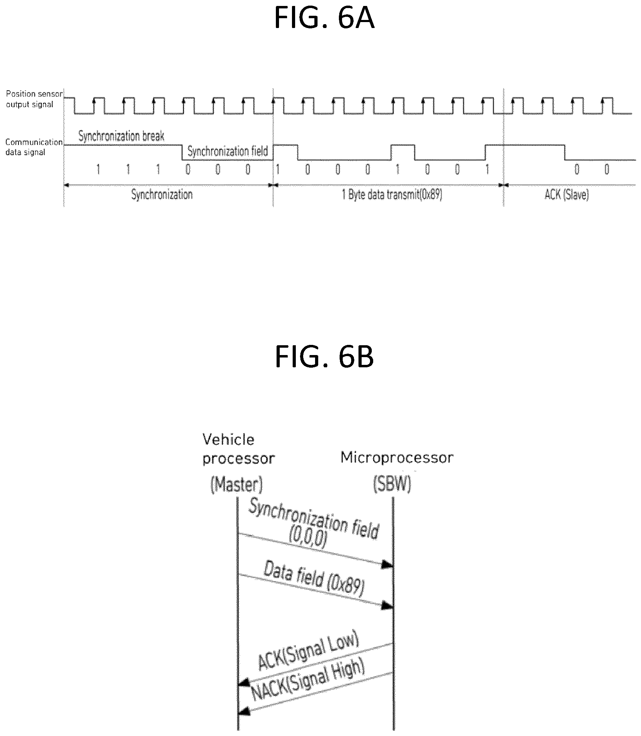

The synchronous transmission method between the vehicle processor 40 and the microprocessor 150 will be discussed in more detail in the description of FIG. 6.

In addition to receiving the predetermined data signal through communication, if the position sensor power supply voltage is applied to the position sensor 300, the bidirectional switch circuit 110 may be operated to drive the DC motor 200.

Further, the actuator 10' for the transmission according to another embodiment of the present disclosure may be an actuator for the shift-by-wire system of the vehicle, like the actuator 10 according to the embodiment of FIG. 1.

According to the actuator 10' according to another embodiment of the present disclosure as described above, by allowing the DC motor to be driven only when the position sensor power supply voltage is applied and a predetermined data signal is received through communication with the vehicle processor, it is possible to further improve the security performance of the actuator.

Moreover, in transmitting data signals through communication, since the output signal of the existing position sensor can be used to synchronize the transmission signal and the reception signal, and the existing position sensor power supply that applies a voltage to the position sensor can be used, it is possible to improve security performance using communication with a relatively simple configuration by additionally providing only a connector pin for receiving communication data signals.

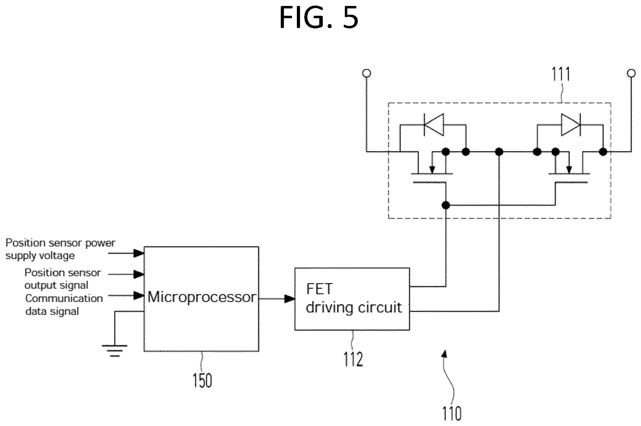

FIG. 5 is a diagram schematically showing a configuration of a bidirectional switch circuit and a microprocessor connected to the bidirectional switch circuit included in a controller of the actuator according to another embodiment of the present disclosure.

As can be seen from the circuit configuration shown in FIG. 5, the circuit included in the controller of the actuator according to another embodiment of the present disclosure may include a microprocessor 150 connected with the bidirectional switch circuit 110. As previously discussed in the embodiment of FIG. 3, the bidirectional switch circuit 110 may include a back-to-back N-channel MOSFET 111 and a FET driving circuit 112.

The microprocessor 150 may be configured to receive the output signal from the position sensor and the communication data signal from the vehicle processor. The microprocessor 150 may control to perform synchronization using the output signal from the position sensor, to receive the data signal from the vehicle processor, and to operate the bidirectional switch circuit 110 only if the data signal is a predetermined data signal.

Further, the bidirectional switch circuit 110 may be controlled to be operated only if a predetermined communication data signal is received and the voltage from the position sensor power supply (for example, 2V or higher) is applied.

According to the embodiment of the present disclosure shown in FIGS. 4 and 5, since it may be controlled such that the DC motor is driven if a predetermined data signal is received, based on communication between the vehicle processor (main processor) and the microprocessor provided in the actuator, it is possible to further improve the security function of the actuator.

FIGS. 6A and 6B are diagrams schematically showing a method of transmitting and receiving synchronized signals through communication in the actuator according to another embodiment of the present disclosure.

As shown in FIG. 6A, synchronization of the transmission signal and the reception signal may be performed using the position sensor output signal (PWM signal) as a reference clock. Next, the microprocessor of the actuator, for example, the microprocessor (Slave) of the actuator used in the SBW (Shift-By-Wire) system, receives a data signal from the vehicle processor (Master), and in case that the data signal is a predetermined data signal (for example, a signal with a data code value of 0x89), a Signal Low signal (ACK signal), which is a reception confirmation signal, may be sent to the vehicle processor.

Meanwhile, referring to FIG. 6B, if the data signal from the vehicle processor (Master) is not the predetermined data signal, the ACK signal (Signal Low) may not be sent and a NACK (not acknowledge) signal (Signal High) may be sent. In this case, the vehicle processor (Master) may be requested to retransmit the data signal. This retransmission request may be made a predetermined number of times, and the predetermined number of times may be, for example, 5 times. However, the present disclosure is not limited thereto, and the number of times may be set differently as needed.

As described above, through synchronous signal transmission between the vehicle processor and the microprocessor provided in the actuator, by operating the bidirectional switch circuit to drive the DC motor only if a predetermined communication signal is confirmed (the ACK signal is sent), it is possible to effectively prevent the vehicle theft by ensuring thorough security on changing the gear shift stage of the transmission of the vehicle.

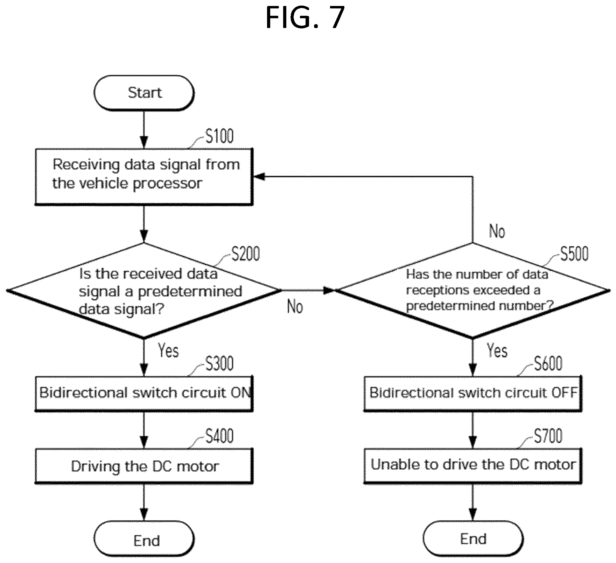

FIG. 7 is a flowchart schematically showing a control method of the actuator according to another embodiment of the present disclosure.

According to the control method of the actuator according to another embodiment of the present disclosure, a step of receiving a data signal from the vehicle processor (S100) may be performed first.

Next, a step of determining whether the received data signal is a predetermined data signal (S200) may be performed. If the received data signal is the predetermined data signal ('Yes' in S200), the bidirectional switch circuit included in the controller may be controlled to be operated (Switch ON) (S300), and the DC motor may be driven accordingly (S400).

Here, in the step of determining whether the received data signal is the predetermined data signal (S200), the received data signal may be recognized in synchronization with the output signal of the position sensor for detecting the position of the DC motor, and an acknowledgment (ACK) for the predetermined data signal may be performed.

Meanwhile, if the received data signal is not the predetermined data signal ('No' in S200), it may be determined whether the number of data receptions has exceeded the predetermined number (S500). If the number of data receptions does not exceed the predetermined number (for example, 5 times) ('No' in S500), the vehicle processor may request retransmission of the data signal.

In addition, if the number of data receptions exceeds a predetermined number (for example, 5 times) ('Yes' in S500), the bidirectional switch circuit included in the controller may be in the OFF state (S600), and the DC motor may become unable to drive (S700).

On the other hand, if the number of data receptions exceeds the predetermined number, the DC motor may be controlled so that it is unable to be driven, and a warning signal (for example, an auditory signal) may be generated from the vehicle. In this way, if a person trying to steal the vehicle attempts to operate the actuator more than the predetermined number of times, it is possible to notify the surroundings of the vehicle.

According to the control method of the actuator for the transmission of the vehicle, through communication with the vehicle processor, the DC motor can be driven by operating the bidirectional switch circuit only if the received signal is a predetermined signal. Accordingly, it is possible to provide the actuator with enhanced security performance in the actuator using the DC motor.

As discussed above, according to the actuator for the transmission of the vehicle according to the embodiment of the present disclosure, in the actuator using the DC motor, the operation of the security circuit can be controlled using the position sensor power supply without additional configuration of the device. Accordingly, it is possible to provide the actuator with excellent security performance by adding a simple configuration of the bidirectional switch circuit.

In addition, according to the actuator according to another embodiment of the present disclosure, a synchronized signal is transmitted and received by using the sensor output of the position sensor as a reference clock, and the bidirectional switch circuit is operated only if a predetermined data signal is received. Therefore, it is possible to further improve security performance while minimizing the additional configuration for communication.

Moreover, according to the control method of the actuator according to another embodiment of the present disclosure, in controlling the driving of the DC motor by transmission and reception of synchronized data signals, by controlling the DC motor not to be driven if the data signal is received more than a predetermined number of times, it is possible to more reliably prevent the vehicle theft in case that a person trying to steal the vehicle attempts to operate the actuator multiple times.

The above description of the present disclosure is for illustrative purposes, and those skilled in the art may understand that it can be easily modified into other specific forms without changing the technical spirit or essential features of the present disclosure. Therefore, the embodiments described above should be understood as illustrative in all respects and not limiting. For example, each component described as a single type may be implemented in a distributed manner, and similarly, components described as distributed may be implemented in a combined form.

The scope of the present disclosure is indicated by the following claims rather than the above detailed description, and all changes or modifications derived from the meaning and scope of the claims and equivalent concepts should be interpreted to be included in the scope of the present disclosure.

### EXPLANATION OF REFERENCE

10, 10': Actuator
20: DC motor power supply
30: Position sensor power supply
40: Vehicle processor
100, 100': Controller
110: Bidirectional switch circuit
111: N-channel MOSFET
112: FET driving circuit
120: First leg
121: First switching element
122: Second switching element
130: Second leg
131: Third switching element
132: Fourth switching element
150: Microprocessor
200: DC motor
300: Position sensor

## Claims

1. An actuator of a vehicle comprising:
a DC motor configured to be driven by application of current to change a gear shift stage;
a position sensor configured to detect a position of the DC motor; and
a controller configured to control the DC motor,
wherein the controller comprises a bidirectional switch circuit to control a flow of current to the DC motor, and
if a voltage from a position sensor power supply is applied to the position sensor, the bidirectional switch circuit is configured to be operated to drive the DC motor.

2. An actuator of a vehicle comprising:
a DC motor configured to be driven by application of current to change a gear shift stage;
a position sensor configured to detect a position of the DC motor; and
a controller configured to control the DC motor,
wherein the controller comprises: a bidirectional switch circuit for controlling a flow of current to the DC motor; and a microprocessor connected to the bidirectional switch circuit, and
if the microprocessor receives a predetermined data signal through communication with a vehicle processor, the bidirectional switch circuit is configured to be operated to drive the DC motor.

3. The actuator of claim 2, wherein the bidirectional switch circuit is configured to be operated to drive the DC motor if a voltage from a position sensor power supply is applied to the position sensor and the microprocessor receives the predetermined data signal.

4. The actuator of claim 2 or 3, wherein the microprocessor is configured to recognize the received data signal in synchronization with an output signal of the position sensor, determine whether the received data signal is the predetermined data signal, and operate the bidirectional switch circuit if a reception confirmation signal is transmitted.

5. The actuator of any one of claims 2 to 4, wherein if the received data signal is not the predetermined data signal, the microprocessor is configured to request retransmission of the data signal a predetermined number of times, and to control the bidirectional switch circuit not to be operated if receptions of the data signal exceed the predetermined number of times.

6. A control method of an actuator of a vehicle, comprising:
receiving a data signal from a vehicle processor;
determining whether the received data signal is a predetermined data signal;
if the received data signal is the predetermined data signal, operating a bidirectional switch circuit to control a flow of current to a DC motor; and
driving the DC motor.

7. The control method of claim 6, wherein the determining of whether the received data signal is the predetermined data signal comprises: recognizing the received data signal in synchronization with an output signal of a position sensor for detecting a position of the DC motor; and transmitting a reception confirmation signal if it is determined to be the predetermined data signal.

8. The control method of claim 6 or 7, wherein if it is determined that the received data signal is not the predetermined data signal in the determining of whether the received data signal is the predetermined data signal, a request to retransmit the data signal is transmitted to the vehicle processor, and
if receptions of the data signal exceed a predetermined number of times by repeating the retransmission request, the bidirectional switch circuit is controlled not to be operated.
